# EUROPÄISCHE PATENTSCHRIFT

(11) **EP 4 399 133 B1**
(45) Veröffentlichungstag und Bekanntmachung des Hinweises auf die Patenterteilung: **28.05.2025**
(21) Anmeldenummer: 22812592.8
(22) Anmeldetag: 01.11.2022
(51) Int. Cl.: B60W 40/06, B60W 60/00, B60W 30/18

(54) **VERFAHREN UND VORRICHTUNG ZUR STEUERUNG EINES AUTOMATISIERT FAHRENDEN FAHRZEUGS**
METHOD AND DEVICE FOR CONTROLLING AN AUTOMATICALLY DRIVING VEHICLE
PROCÉDÉ ET DISPOSITIF DE COMMANDE D'UN VÉHICULE À CONDUITE AUTOMATIQUE

(30) Priorität: 23.11.2021 DE 102021213166
(43) Veröffentlichungstag der Anmeldung: 17.07.2024
(73) Patentinhaber: Mercedes-Benz Group AG, 70372 Stuttgart (DE)
(72) Erfinder: GRESSMANN, Markus, 71032 Böblingen (DE); KELLER, Christoph Gustav, 70176 Stuttgart (DE); MIELENZ, Holger, 73760 Ostfildern (DE)
(74) Vertreter: Novagraaf Group
(86) Internationale Anmeldenummer: PCT/EP2022/080439
(87) Internationale Veröffentlichungsnummer: WO 2023/094121

(56) Entgegenhaltungen:
- EP-A1- 3 599 141
- DE-A1- 102008 006 849
- DE-A1- 102015 224 192
- DE-A1- 102016 207 181
- DE-A1- 102018 217 746
- DE-A1- 102020 111 486
- US-A1- 2013 274 958

## Beschreibung

Die Erfindung betrifft ein Verfahren zur Steuerung eines automatisiert fahrenden Fahrzeugs gemäß dem Oberbegriff des Anspruchs 1.

Die Erfindung betrifft eine Vorrichtung zur Steuerung eines automatisiert fahrenden Fahrzeugs gemäß dem Oberbegriff des Anspruchs 9.

Aus der DE 10 2019 105 739 A1 ist ein Verfahren zum teilautomatisierten Führen eines Kraftfahrzeugs unter Sichtverdeckung einer Umfeldsensorik des Kraftfahrzeugs mit folgenden Schritten bekannt:
- Erzeugen und Ausgeben von Hineintaststeuersignalen zum Steuern einer Quer- und Längsführung des Kraftfahrzeugs, um das Kraftfahrzeug teilautomatisiert derart zu führen, dass sich das Kraftfahrzeug in einen Straßenknotenpunkt hineintastet;
- Empfangen von Umgebungssignalen, welche eine Umgebung des Kraftfahrzeugs während des Hineintastens in den Straßenknotenpunkt repräsentieren;
- Bestimmen basierend auf den Umgebungssignalen, dass sich das Kraftfahrzeug weiter in den Straßenknotenpunkt hineintasten darf, anhalten oder zurücksetzen muss;
- Erzeugen und Ausgeben von Steuersignalen zum Steuern der Quer- und Längsführung des Kraftfahrzeugs basierend auf dem Bestimmen, um das Kraftfahrzeug entsprechend dem Bestimmen teilautomatisiert derart zu führen, dass sich das Kraftfahrzeug weiter in den Straßenknotenpunkt hineintastet, anhält oder zurücksetzt.

Aus der EP 3 599 141 A1 ist ein Verfahren zum Führen eines Fahrzeugs bekannt, bei dem eine zukünftige Position des Fahrzeugs als Stoppposition ermittelt wird, an der das Fahrzeug zur Beachtung einer roten Ampel anhalten soll, wobei die Stoppposition derart ermittelt wird, dass die Ampel, in einem Sichtfeld einer Sensoranordnung des Fahrzeugs liegt.

Aus der DE 10 2015 224 192 A1 ist ein Verfahren zur Bewertung der Befahrbarkeit eines Streckenabschnitts bekannt, wobei die Bewertung unter Berücksichtigung einer Höhenkarte erfolgt, welche eine Topologie des Streckenabschnitts repräsentiert.

Aus der DE 10 2016 207 181 A1 ist ein Verfahren zur Lokalisierung eines Fahrzeugs auf einer Fahrbahn bekannt, bei dem die Lokalisierung auf einer Erfassung eines Höhenprofils einer Fahrzeugumgebung und einem Vergleich des erfassten Höhenprofils mit einem in einer Referenzkarte interlegten Referenzhöhenprofil beruht.

Aus der DE 10 2018 217 746 A1 ist ein Verfahren zum Betrieb eines Fahrerassistenzsystems bekannt, das zur zumindest teilweisen automatischen Führung eines Fahrzeugs eingerichtet ist. Dabei ist vorgesehen, dass das Fahrzeug entlang einer Trajektorie geführt wird, welche das Fahrzeug bei Erkennung einer Reduzierung einer Erfassungsreichweite eines Abstandssensors zumindest zeitweise näher an eine Fahrspurbegrenzung führt oder zumindest zeitweise weitere weg von einem Verkehrsteilnehmer führt, der das Sichtfeld des Abstandssensors verdeckt.

Aus der DE 10 2008 0069 849 A1 ist ein Fahrzeug bekannt, dessen Höhenlage veränderbar ist, um einen seitlichen Zugang zu einer Dachbox zu erleichtern.

Aus der US 2013/274 958 A1 ist ein Informationsverarbeitungssystem für ein Fahrzeug bekannt, das zur Unterstützung eines Fahrers basierend auf einem in einer Datenbank gespeicherten Betriebsmuster vorgesehen ist.

Der Erfindung liegt die Aufgabe zu Grunde, ein neuartiges Verfahren zur Steuerung eines automatisiert fahrenden Fahrzeugs und eine neuartige Vorrichtung zur Steuerung eines automatisiert fahrenden Fahrzeugs anzugeben.

Die Aufgabe wird erfindungsgemäß gelöst durch ein Verfahren, welches die im Anspruch 1 angegebenen Merkmale aufweist, und durch eine Vorrichtung, welche die im Anspruch 9 angegebenen Merkmale aufweist.

Vorteilhafte Ausgestaltungen der Erfindung sind Gegenstand der Unteransprüche.

In einem Verfahren zur Steuerung eines automatisiert, insbesondere hochautomatisiert oder autonom, fahrenden Fahrzeugs im Bereich einer Straßenkreuzung werden mittels einer Umgebungserfassungssensorik erfasste Daten verwendet.

Erfindungsgemäß werden vor Erreichen der Straßenkreuzung entlang eines dem Fahrzeug bis zum Erreichen der Straßenkreuzung vorausliegenden Fahrwegs mehrere zukünftige Fahrzeugpositionen als Stopppunktkandidaten bestimmt. Für jeden der Stopppunktkandidaten wird ein Sichtfeld der Umgebungserfassungssensorik unter Berücksichtigung eines Höhenprofils einer Fahrbahnoberfläche im Bereich der Straßenkreuzung prädiziert, wobei der Stopppunktkandidat, an welchem die Umgebungserfassungssensorik das größte Sichtfeld aufweist, als Stoppposition des Fahrzeugs ausgewählt wird. An der Stoppposition wird mittels der Umgebungserfassungssensorik eine Fahrzeugumgebung erfasst und in Abhängigkeit einer aus den Daten der Umgebungserfassungssensorik ermittelten Verkehrssituation wird das Fahrzeug automatisiert in die Straßenkreuzung hineingesteuert.

Mittels des Verfahrens kann eine Umgebungserfassung im Bereich von Straßenkreuzungen, welche beispielsweise aufgrund eines Höhenprofils der Fahrbahnoberfläche für die Umgebungserfassungssensorik des Fahrzeugs schwer einsehbar ist, signifikant verbessert werden. Somit wird eine Sicherheit beim automatisierten Be- und Durchfahren einer Straßenkreuzung durch ein Fahrzeug erhöht.

In einer möglichen Ausgestaltung des Verfahrens wird an der Stoppposition eine Ausrichtung des Fahrzeugs mittels eines aktiven Fahrwerks desselben derart verändert, dass das Sichtfeld der Umgebungserfassungssensorik maximiert wird. Dies ermöglicht eine weitere verbesserte Umgebungserfassung im Bereich von Straßenkreuzungen.

In einer weiteren möglichen Ausgestaltung des Verfahrens wird an der Stoppposition eine Position des Fahrzeugs durch eine automatisierte Längs- und/oder Querbewegung derart verändert, dass das Sichtfeld der Umgebungserfassungssensorik maximiert wird. Auch hierdurch kann die Umgebungserfassung im Bereich von Straßenkreuzungen weiter verbessert werden.

In einer weiteren möglichen Ausgestaltung des Verfahrens werden die Stopppunktkandidaten anhand von Kartendaten einer digitalen Straßenkarte bestimmt. Dies stellt eine einfache und zuverlässige Bestimmung der Stopppunktkandidaten dar.

In einer weiteren möglichen Ausgestaltung des Verfahrens werden die Stopppunktkandidaten anhand von Modelldaten eines Umgebungsmodells bestimmt. Dies stellt ebenfalls eine einfache und zuverlässige Bestimmung der Stopppunktkandidaten dar.

In einer weiteren möglichen Ausgestaltung des Verfahrens wird das Umgebungsmodell anhand der Daten der Umgebungserfassungssensorik erzeugt. Hieraus ergibt sich in vorteilhafter Weise, dass das Umgebungsmodell aktuell ist, so dass gegebenenfalls in der Fahrzeugumgebung vorhandene Änderungen berücksichtigt werden können.

In einer weiteren möglichen Ausgestaltung des Verfahrens wird anhand der an der Stoppposition mittels der Umgebungserfassungssensorik der Fahrzeugumgebung erfassten Daten ein dreidimensionales weiteres Umgebungsmodell der Fahrzeugumgebung erstellt, welches aufgrund des großen Sichtfelds der Umgebungserfassungssensorik an der Stoppposition die Fahrzeugumgebung besonders zuverlässig und genau abbildet.

In einer weiteren möglichen Ausgestaltung des Verfahrens wird anhand des dreidimensionalen weiteren Umgebungsmodells und anhand von Kartendaten einer digitalen Straßenkarte die Ausrichtung des Fahrzeugs zur Maximierung des Sichtfelds der Umgebungserfassungssensorik ermittelt. Somit kann aufgrund der besonders zuverlässigen und genauen Abbildung der Fahrzeugumgebung die Vergrößerung des Sichtfelds besonders zuverlässig maximiert werden.

In einer weiteren möglichen Ausgestaltung des Verfahrens erfolgt die Hineinsteuerung des Fahrzeugs in die Straßenkreuzung durch ein langsames Hineintasten. Hierdurch kann eine Gefahr einer Kollision des Fahrzeugs mit anderen Verkehrsteilnehmern reduziert werden. Der Begriff "hineintasten" ist dabei beispielsweise nach dem Verständnis des Fachmanns im Hinblick auf die deutsche Straßenverkehrsordnung § 8 auszulegen. Dort heißt es im Absatz 2, Satz 3 wie folgt: "Kann das nicht übersehen werden, weil die Straßenstelle unübersichtlich ist, so darf sich vorsichtig in die Kreuzung oder Einmündung hineingetastet werden, bis die Übersicht gegeben ist."

Eine Vorrichtung zur Steuerung eines automatisiert fahrenden Fahrzeugs im Bereich einer Straßenkreuzung weist eine Umgebungserfassungssensorik auf. Erfindungsgemäß weist die Vorrichtung eine Verarbeitungseinheit auf, welche ausgebildet ist, vor Erreichen der Straßenkreuzung entlang eines dem Fahrzeug bis zum Erreichen der Straßenkreuzung vorausliegenden Fahrwegs mehrere zukünftige Fahrzeugpositionen als Stopppunktkandidaten zu bestimmen. Die Verarbeitungseinheit ist weiterhin ausgebildet, für jeden der Stopppunktkandidaten ein Sichtfeld der Umgebungserfassungssensorik unter Berücksichtigung eines Höhenprofils einer Fahrbahnoberfläche im Bereich der Straßenkreuzung zu prädizieren und den Stopppunktkandidaten, an welchem die Umgebungserfassungssensorik das größte Sichtfeld aufweist, als Stoppposition des Fahrzeugs auszuwählen. Ferner umfasst die Vorrichtung eine Steuereinheit, welche ausgebildet ist, in Abhängigkeit einer aus an der Stoppposition mittels der Umgebungserfassungssensorik erfassten Daten einer Fahrzeugumgebung ermittelten Verkehrssituation das Fahrzeug in Abhängigkeit der Verkehrssituation automatisiert in die Straßenkreuzung hineinzusteuern.

Mittels der Vorrichtung kann eine Umgebungserfassung im Bereich von Straßenkreuzungen, welche beispielsweise aufgrund eines Höhenprofils der Fahrbahnoberfläche für die Umgebungserfassungssensorik des Fahrzeugs schwer einsehbar ist, signifikant verbessert werden. Somit wird eine Sicherheit beim automatisierten Be- und Durchfahren einer Straßenkreuzung durch ein Fahrzeug erhöht.

In einer möglichen Ausgestaltung der Vorrichtung umfasst diese ein aktives Fahrwerk, welches ausgebildet ist, eine Ausrichtung des Fahrzeugs an der Stoppposition derart zu verändern, dass das Sichtfeld der Umgebungserfassungssensorik maximiert ist. Dies ermöglicht eine weitere verbesserte Umgebungserfassung im Bereich von Straßenkreuzungen.

Ausführungsbeispiele der Erfindung werden im Folgenden anhand von Zeichnungen näher erläutert.

Dabei zeigen:
- Fig. 1: schematisch eine Draufsicht einer Straßenkreuzung,
- Fig. 2: schematisch eine perspektivische Ansicht mehrerer Fahrbahnen,
- Fig. 3: schematisch Frontansichten eines Fahrzeugs in unterschiedlichen Zuständen und
- Fig. 4: schematisch ein Blockschaltbild einer Vorrichtung zur Steuerung eines automatisiert fahrenden Fahrzeugs.

Einander entsprechende Teile sind in allen Figuren mit den gleichen Bezugszeichen versehen.

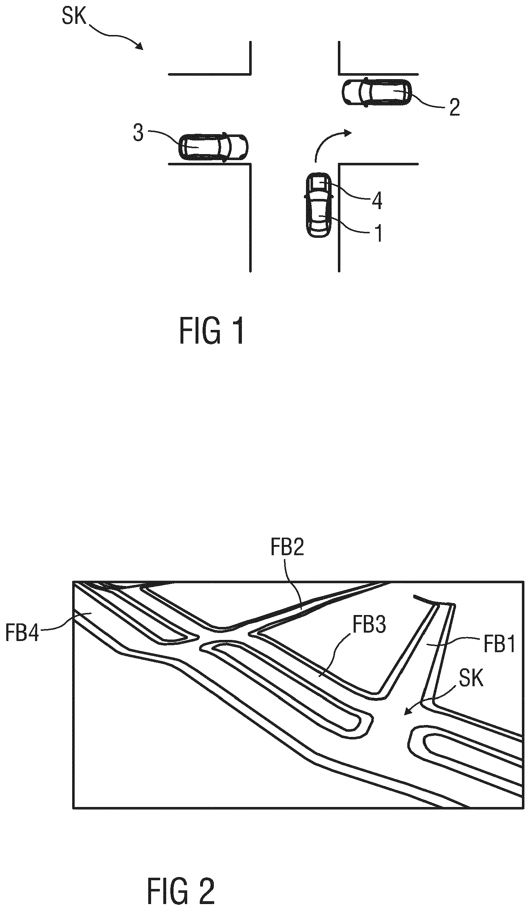

In Figur 1 ist eine Draufsicht einer Straßenkreuzung SK mit einem Fahrzeug 1 und zwei weiteren Fahrzeugen 2, 3 dargestellt.

Das Fahrzeug 1 ist zu einem automatisierten, insbesondere hochautomatisierten oder autonomen, Fahrbetrieb ausgebildet. Für eine Durchführung des automatisierten Fahrbetriebs ist eine Erfassung einer Fahrzeugumgebung erforderlich. Zu dieser Erfassung umfasst das Fahrzeug 1 eine Umgebungserfassungssensorik 4.

Vor der Befahrung der Straßenkreuzung SK durch das Fahrzeug 1 ist es erforderlich, dass alle anderen Verkehrsteilnehmer, vorliegend die weiteren Fahrzeuge 2, 3, erfasst werden, um eine sichere Befahrung der Straßenkreuzung SK unter Vermeidung von Kollisionen und Einhaltung gesetzlicher Vorgaben, beispielsweise Vorfahrtsregelungen, zu realisieren.

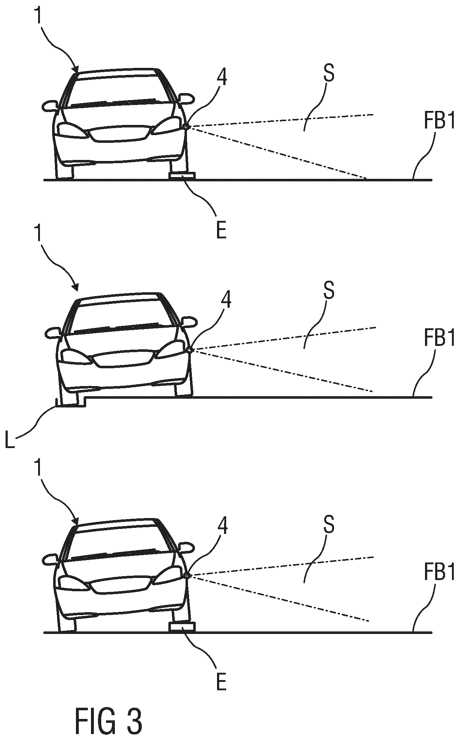

Figur 2 zeigt eine perspektivische Ansicht mehrerer Fahrbahnen FB1 bis FB4, welche sich zumindest teilweise durch ein hügeliges Höhenprofil ihrer Fahrbahnoberflächen auszeichnen. In Figur 3 sind Frontansichten des Fahrzeugs 1 in unterschiedlichen Zuständen auf einer Fahrbahn FB1 mit einer unebenen Fahrbahnoberfläche dargestellt.

Aufgrund des Höhenprofils der Fahrbahnen FB1 bis FB4 und/oder aufgrund einer unebenen Fahrbahnoberfläche, beispielsweise mit Schlaglöchern L und/oder Erhebungen E, kann es bei Sensoren der Umgebungserfassungssensorik 4 mit begrenztem vertikalen Öffnungswinkel zu Einschränkungen eines Sichtfelds S kommen. Diese Einschränkungen können dazu führen, dass keine ausreichende Erfassung der Fahrbahnoberfläche möglich ist und der entsprechende Sensor nicht ausreichend geneigt ist, um die Fahrzeugumgebung entlang einer Fahrbahn FB1 bis FB4 zu erfassen und um sich bewegende Verkehrsteilnehmer zu erkennen.

Um eine solche Einschränkung des Sichtfelds S zu vermeiden, sind eine Vorrichtung 5 und ein Verfahren zur Steuerung eines automatisiert fahrenden Fahrzeugs 1 vorgesehen.

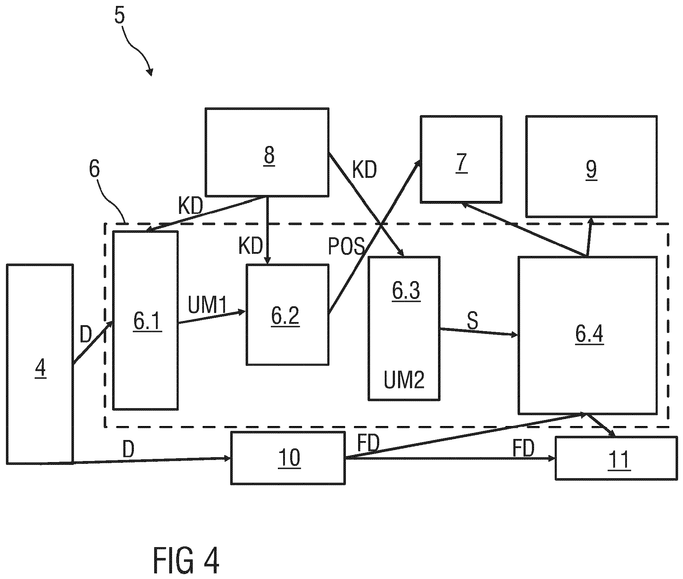

Ein Blockschaltbild eines möglichen Ausführungsbeispiels einer solchen Vorrichtung 5 zeigt Figur 4.

Die Vorrichtung 5 umfasst die Umgebungserfassungssensorik 4, welche beispielsweise Kamera-, Radar- und/oder Lidarsensoren und/oder weitere Sensoren zur Erfassung der Fahrzeugumgebung umfasst. Weiterhin umfasst die Vorrichtung 5 eine Verarbeitungseinheit 6 mit mehreren Verarbeitungsmodulen 6.1 bis 6.4, eine Steuereinheit 7, eine digitale Straßenkarte 8, ein aktives Fahrwerk 9 des Fahrzeugs 1, ein Fusionsmodul 10 und ein Steuerungsmodul 11.

Mittels des Fusionsmoduls 10 werden mittels mehrerer Sensoren der Umgebungserfassungssensorik 4 erfasste Daten D zu fusionierten Daten FD fusioniert, wobei anhand der fusionierten Daten FD statische und dynamische Objekte in der Fahrzeugumgebung erfasst werden.

Aus mittels der Umgebungserfassungssensorik 4 erfassten Daten D sowie Kartendaten KD der digitalen Straßenkarte 8 wird mittels eines ersten Verarbeitungsmoduls 6.1 der Verarbeitungseinheit 6 anhand einer Schätzung eines Profils der Fahrbahnoberfläche und einer Fahrbahnoberflächenerfassung, beispielsweise von Schlaglöchern L und/oder Erhebungen E, ein dreidimensionales Umgebungsmodell UM1 erzeugt.

Anschließend erfolgt in einem zweiten Verarbeitungsmodul 6.2 der Verarbeitungseinheit 6 anhand des Umgebungsmodells UM1 und der Kartendaten KD eine Ermittlung einer Stoppposition POS des Fahrzeugs 1 aus einer Mehrzahl von Stopppunktkandidaten, welche auf einem vorausliegenden Fahrweg des Fahrzeugs 1 befindliche zukünftige Fahrzeugpositionen darstellen. Dabei wird für jeden der Stopppunktkandidaten ein Sichtfeld S der Umgebungserfassungssensorik 4 unter Berücksichtigung des Höhenprofils der Fahrbahnoberfläche im Bereich der Straßenkreuzung SK prädiziert, wobei der Stopppunktkandidat, an welchem die Umgebungserfassungssensorik 4 das größte Sichtfeld S aufweist, als Stoppposition POS des Fahrzeugs 1 ausgewählt wird. Diese Stoppposition POS wird an die Steuereinheit 7 zur Steuerung einer automatisierten Längs- und/oder Querbewegung des Fahrzeugs 1 übermittelt, so dass das Fahrzeug 1 zu der Stoppposition POS geführt wird und an dieser stoppt.

An der Stoppposition POS wird in Abhängigkeit der Kartendaten KD, insbesondere anhand einer von in diesen enthaltenen Fahrbahngeometrie der Straßenkreuzung SK, und anhand der fusionierten Daten FD mittels eines weiteren Verarbeitungsmoduls 6.3 ein mögliches Sichtfeld S der Umgebungserfassungssensorik 4 ermittelt. Hierbei wird aus den Daten D und/oder den fusionierten Daten FD insbesondere ein weiteres dreidimensionales Umgebungsmodell UM2 ermittelt, wobei anhand dessen mittels des Verarbeitungsmoduls 6.4 ermittelt wird, ob durch Änderung einer Ausrichtung des Fahrzeugs 1 mittels eines aktiven Fahrwerks 9 desselben, an der Stoppposition POS das Sichtfeld S der Umgebungserfassungssensorik 4 vergrößert werden kann. Ist dies der Fall, wird mittels des aktiven Fahrwerks 9 die Ausrichtung des Fahrzeugs 1, das heißt eine Neigung desselben zur Fahrbahnoberfläche, derart geändert, dass das Sichtfeld S maximiert wird.

Zusätzlich wird an der Stoppposition POS in Abhängigkeit der Kartendaten KD und der fusionierten Daten FD mittels des Verarbeitungsmoduls 6.4 überprüft, ob durch weitere, insbesondere geringfügige, Veränderung der Position des Fahrzeugs 1 durch eine automatisierte Längs- und/oder Querbewegung das Sichtfeld S der Umgebungserfassungssensorik 4 weiter vergrößert werden kann. Ist dies der Fall, wird das Fahrzeug 1 ausgehend von der Stoppposition POS mittels der Steuereinheit 7 zur Steuerung der automatisierten Längs- und/oder Querbewegung in eine neue Stoppposition POS bewegt.

Ist die Stoppposition POS mit maximiertem Sichtfeld S erreicht und die Neigung des Fahrzeugs 1 mittels des aktiven Fahrwerks 9 entsprechend eingestellt, wird mittels der Umgebungserfassungssensorik 4 die Fahrzeugumgebung an der Stoppposition POS erfasst. In Abhängigkeit einer aus den Daten D der Umgebungserfassungssensorik 4 und/oder den fusionierten Daten FD ermittelten Verkehrssituation steuert das Steuerungsmodul 11 das Fahrzeug 1 automatisiert in die Straßenkreuzung SK hinein. Dies kann beispielsweise durch ein langsames Hineintasten erfolgen.

### Bezugszeichenliste

- 1: Fahrzeug
- 2: Fahrzeug
- 3: Fahrzeug
- 4: Umgebungserfassungssensorik
- 5: Vorrichtung
- 6: Verarbeitungseinheit
- 6.1 bis 6.4: Verarbeitungsmodul
- 7: Steuereinheit
- 8: digitale Straßenkarte
- 9: aktives Fahrwerk
- 10: Fusionsmodul
- 11: Steuerungsmodul

- D: Daten
- E: Erhebung
- FB1 bis FB4: Fahrbahn
- FD: fusionierte Daten
- KD: Kartendaten
- L: Schlagloch
- POS: Stoppposition
- S: Sichtfeld
- SK: Straßenkreuzung
- UM1: Umgebungsmodell
- UM2: Umgebungsmodell

## Patentansprüche

1. Verfahren zur Steuerung eines automatisiert fahrenden Fahrzeugs (1) im Bereich einer Straßenkreuzung (SK) unter Verwendung von mittels einer Umgebungserfassungssensorik (4) erfassten Daten (D), wobei
- vor Erreichen der Straßenkreuzung (SK) entlang eines dem Fahrzeug (1) bis zum Erreichen der Straßenkreuzung (SK) vorausliegenden Fahrwegs mehrere zukünftige Fahrzeugpositionen als Stopppunktkandidaten bestimmt werden,
- für jeden der Stopppunktkandidaten ein Sichtfeld (S) der Umgebungserfassungssensorik (4) prädiziert wird,
- ein Stopppunktkandidat als Stoppposition (POS) des Fahrzeugs (1) ausgewählt wird,
- an der Stoppposition (POS) mittels der Umgebungserfassungssensorik (4) eine Fahrzeugumgebung erfasst wird und
- in Abhängigkeit einer aus den Daten (D) der Umgebungserfassungssensorik (4) ermittelten Verkehrssituation das Fahrzeug (1) automatisiert in die Straßenkreuzung (SK) hineingesteuert wird,
**dadurch gekennzeichnet, dass**
- für jeden der Stopppunktkandidaten die Prädiktion des Sichtfelds (S) unter Berücksichtigung eines Höhenprofils einer Fahrbahnoberfläche im Bereich der Straßenkreuzung (SK) erfolgt und
- derjenige Stopppunktkandidat als Stoppposition (POS) ausgewählt wird, an welchem die Umgebungserfassungssensorik (4) das größte Sichtfeld (S) aufweist.

2. Verfahren nach Anspruch 1,
**dadurch gekennzeichnet, dass** an der Stoppposition (POS) eine Ausrichtung des Fahrzeugs (1) mittels eines aktiven Fahrwerks (9) desselben derart verändert wird, dass das Sichtfeld (S) der Umgebungserfassungssensorik (4) maximiert wird.

3. Verfahren nach Anspruch 1 oder 2,
**dadurch gekennzeichnet, dass** an der Stoppposition (POS) eine Position des Fahrzeugs (1) durch eine automatisierte Längs- und/oder Querbewegung derart verändert wird, dass das Sichtfeld (S) der Umgebungserfassungssensorik (4) maximiert wird.

4. Verfahren nach einem der vorhergehenden Ansprüche,
**dadurch gekennzeichnet, dass** die Stopppunktkandidaten anhand von Kartendaten (KD) einer digitalen Straßenkarte (8) bestimmt werden.

5. Verfahren nach einem der vorhergehenden Ansprüche,
**dadurch gekennzeichnet, dass** die Stopppunktkandidaten anhand von Modelldaten eines Umgebungsmodells (UM1) bestimmt werden.

6. Verfahren nach Anspruch 5,
**dadurch gekennzeichnet, dass** das Umgebungsmodell (UM1) anhand der Daten (D) der Umgebungserfassungssensorik (4) erzeugt wird.

7. Verfahren nach einem der vorhergehenden Ansprüche,
**dadurch gekennzeichnet, dass** anhand der an der Stoppposition (POS) mittels der Umgebungserfassungssensorik (4) der Fahrzeugumgebung erfassten Daten (D) ein dreidimensionales weiteres Umgebungsmodell (UM2) der Fahrzeugumgebung erstellt wird.

8. Verfahren nach Anspruch 7,
**dadurch gekennzeichnet, dass** anhand des dreidimensionalen weiteren Umgebungsmodells (UM2) und anhand von Kartendaten (KD) einer digitalen Straßenkarte (8) die Ausrichtung des Fahrzeugs (1) zur Maximierung des Sichtfelds (S) der Umgebungserfassungssensorik (4) ermittelt wird.

9. Vorrichtung (5) zur Steuerung eines automatisiert fahrenden Fahrzeugs (1) im Bereich einer Straßenkreuzung (SK) mit
einer Umgebungserfassungssensorik (4),
einer Verarbeitungseinheit (6), welche ausgebildet ist,
- vor Erreichen der Straßenkreuzung (SK) entlang eines dem Fahrzeug (1) bis zum Erreichen der Straßenkreuzung (SK) vorausliegenden Fahrwegs mehrere zukünftige Fahrzeugpositionen als Stopppunktkandidaten zu bestimmen,
- für jeden der Stopppunktkandidaten ein Sichtfeld (S) der Umgebungserfassungssensorik (4) zu prädizieren und
- einen Stopppunktkandidaten als Stoppposition (POS) des Fahrzeugs (1) auszuwählen, und
einer Steuereinheit (7), welche ausgebildet ist,
- in Abhängigkeit einer aus an der Stoppposition (POS) mittels der Umgebungserfassungssensorik (4) erfassten Daten (D) einer Fahrzeugumgebung ermittelten Verkehrssituation das Fahrzeug (1) in Abhängigkeit der Verkehrssituation automatisiert in die Straßenkreuzung (SK) hineinzusteuern,
**dadurch gekennzeichnet,**
**dass** die Verarbeitungseinrichtung (6) ausgebildet ist,
- für jeden der Stopppunktkandidaten das Sichtfeld (S) der Umgebungserfassungssensorik (4) unter Berücksichtigung eines Höhenprofils einer Fahrbahnoberfläche im Bereich der Straßenkreuzung (SK) zu prädizieren und
- den Stopppunktkandidaten, an welchem die Umgebungserfassungssensorik (4) das größte Sichtfeld (S) aufweist, als Stoppposition (POS) des Fahrzeugs (1) auszuwählen.

10. Vorrichtung (5) nach Anspruch 9,
**gekennzeichnet durch** ein aktives Fahrwerk (9), welches ausgebildet ist, eine Ausrichtung des Fahrzeugs (1) an der Stoppposition (POS) derart zu verändern, dass das Sichtfeld (S) der Umgebungserfassungssensorik (4) maximiert ist.

## Claims

1. Method for controlling an automated vehicle (1) in the region of a road intersection (SK) using data (D) acquired by means of an environment acquisition sensor system (4), wherein
- before the road intersection (SK) is reached, a plurality of future vehicle positions are determined as stopping point candidates along a route ahead of the vehicle (1) until the road intersection (SK) is reached,
- for each of the stop point candidates, a field of view (S) of the environment acquisition sensor system (4) is predicted,
- a stop point candidate is selected as the stop position (POS) of the vehicle (1),
- at the stop position (POS), a vehicle environment is acquired by means of the environment acquisition sensor system (4) and
- depending on a traffic situation determined from the data (D) of the environment acquisition sensor system (4), the vehicle (1) is guided into the road intersection (SK) in an automated manner,
**characterized in that**
- for each of the stopping point candidates, the field of view (S) is predicted taking into account a height profile of a road surface in the region of the road intersection (SK) and
- the stop point candidate at which the environment acquisition sensor system (4) has the largest field of view (S) is selected as the stop position (POS).

2. Method according to claim 1,
**characterized in that** at the stop position (POS), an orientation of the vehicle (1) is changed by means of an active chassis (9) thereof such that the field of view (S) of the environment acquisition sensor system (4) is maximized.

3. Method according to either claim 1 or claim 2,
**characterized in that** at the stop position (POS), a position of the vehicle (1) is changed by an automated longitudinal and/or transverse movement such that the field of view (S) of the environment acquisition sensor system (4) is maximized.

4. Method according to any of the preceding claims,
**characterized in that** the stop point candidates are determined based on map data (KD) of a digital road map (8).

5. Method according to any of the preceding claims,
**characterized in that** the stopping point candidates are determined based on model data from an environment model (UM1).

6. Method according to claim 5,
**characterized in that** the environment model (UM1) is generated based on the data (D) of the environment acquisition sensor system (4).

7. Method according to any of the preceding claims,
**characterized in that** based on the data (D) acquired at the stop position (POS) by means of the environment acquisition sensor system (4) of the vehicle environment, a three-dimensional additional environment model (UM2) of the vehicle environment is created.

8. Method according to claim 7,
**characterized in that** the orientation of the vehicle (1) is determined based on the three-dimensional additional environment model (UM2) and on map data (KD) of a digital road map (8) in order to maximize the field of view (S) of the environment acquisition sensor system (4).

9. Device (5) for controlling an automated vehicle (1) in the region of a road intersection (SK), comprising
an environment acquisition sensor system (4),
a processing unit (6) which is designed
- before the road intersection (SK) is reached, to determine a plurality of future vehicle positions as stopping point candidates along a route ahead of the vehicle (1) until the road intersection (SK) is reached,
- for each of the stop point candidates, to predict a field of view (S) of the environment acquisition sensor system (4) and
- to select a stop point candidate as the stop position (POS) of the vehicle (1), and
a control unit (7) which is designed
- to guide the vehicle (1) into the road intersection (SK) in an automated manner depending on a traffic situation determined from data (D) of a vehicle environment acquired at the stop position (POS) by means of the environment acquisition sensor system (4),
**characterized in that**
the processing device (6) is designed
- for each of the stopping point candidates, to predict the field of view (S) of the environment acquisition sensor system (4) taking into account a height profile of a road surface in the region of the road intersection (SK), and
- to select the stop point candidate at which the environment acquisition sensor system (4) has the largest field of view (S) as the stop position (POS) of the vehicle (1).

10. Device (5) according to claim 9,
**characterized by** an active chassis (9) which is designed to change an orientation of the vehicle (1) at the stop position (POS) such that the field of view (S) of the environment acquisition sensor system (4) is maximized.

## Revendications

1. Procédé permettant de commander un véhicule à conduite automatisée (1) dans la zone d'un carrefour routier (SK) au moyen de données (D) détectées à l'aide d'un système de capteurs de détection d'environnement (4), dans lequel
- avant d'atteindre le carrefour routier (SK), le long d'un trajet précédant le véhicule (1) jusqu'à ce qu'il atteigne le carrefour routier (SK), plusieurs positions futures de véhicule sont déterminées comme des points d'arrêt candidats,
- un champ de vision (S) du système de capteurs de détection d'environnement (4) est prédit pour chacun des de point d'arrêt candidats,
- un point d'arrêt candidat est sélectionné comme position d'arrêt (POS) du véhicule (1),
- à la position d'arrêt (POS), un environnement de véhicule est détecté à l'aide du système de capteurs de détection d'environnement (4) et
- en fonction d'une situation de trafic déterminée à partir des données (D) du système de capteurs de détection d'environnement (4), le véhicule (1) est guidé de manière automatisée dans le carrefour routier (SK),
**caractérisé en ce que**
- pour chacun des points d'arrêt candidats, la prédiction du champ de vision (S) est effectuée en tenant compte d'un profil de hauteur d'une surface de chaussée dans la zone du carrefour routier (SK) et
- le point d'arrêt candidat au niveau duquel le système de capteurs de détection d'environnement (4) présente le plus grand champ de vision (S) est sélectionné comme position d'arrêt (POS).

2. Procédé selon la revendication 1,
**caractérisé en ce qu'**au niveau de la position d'arrêt (POS), une orientation du véhicule (1) est modifiée à l'aide d'un châssis actif (9) de celui-ci de telle sorte que le champ de vision (S) du système de capteurs de détection d'environnement (4) est maximisé.

3. Procédé selon la revendication 1 ou 2,
**caractérisé en ce qu'**au niveau de la position d'arrêt (POS), une position du véhicule (1) est modifiée par un mouvement longitudinal et/ou transversal automatisé de telle sorte que le champ de vision (S) du système de capteurs de détection d'environnement (4) est maximisé.

4. Procédé selon l'une des revendications précédentes,
**caractérisé en ce que** les points d'arrêt candidats sont déterminés à partir de données cartographiques (KD) d'une carte routière numérique (8).

5. Procédé selon l'une des revendications précédentes,
**caractérisé en ce que** les point d'arrêt candidats sont déterminés à partir de données de modèle d'un modèle d'environnement (UM1).

6. Procédé selon la revendication 5,
**caractérisé en ce que** le modèle d'environnement (UM1) est généré à l'aide des données (D) du système de capteurs de détection d'environnement (4).

7. Procédé selon l'une des revendications précédentes,
**caractérisé en ce qu'**un autre modèle d'environnement tridimensionnel (UM2) de l'environnement de véhicule est créé à l'aide des données (D) détectées au niveau de la position d'arrêt (POS) à l'aide du système de capteurs de détection d'environnement (4) de l'environnement de véhicule.

8. Procédé selon la revendication 7,
**caractérisé en ce qu'**à l'aide de l'autre modèle d'environnement tridimensionnel (UM2) et à l'aide de données cartographiques (KD) d'une carte routière numérique (8), l'orientation du véhicule (1) est déterminée pour la maximisation du champ de vision (S) du système de capteurs de détection d'environnement (4).

9. Dispositif (5) permettant de commander un véhicule à conduite automatisée (1) dans la zone d'un carrefour routier (SK) comportant
un système de capteurs de détection d'environnement (4),
une unité de traitement (6), qui est conçue,
- avant d'atteindre le carrefour routier (SK), le long d'une trajectoire précédant le véhicule (1) jusqu'à ce qu'il atteigne le carrefour routier (SK), pour déterminer plusieurs positions futures de véhicule en tant que points d'arrêt candidats,
- pour prédire, pour chacun des points d'arrêt candidats, un champ de vision (S) du système de capteurs de détection d'environnement (4), et
- pour sélectionner un point d'arrêt candidat comme position d'arrêt (POS) du véhicule (1), et
une unité de commande (7), qui est conçue,
- en fonction d'une situation de trafic déterminée à partir de données (D) d'un environnement de véhicule détectées au niveau la position d'arrêt (POS) à l'aide du système de capteurs de détection d'environnement (4), pour guider le véhicule (1) de manière automatisée dans le carrefour routier (SK) en fonction de la situation de trafic,
**caractérisé en ce**
**que** le dispositif de traitement (6) est conçu,
- pour prédire, pour chacun des points d'arrêt candidats, le champ de vision (S) du système de capteurs de détection d'environnement (4) en tenant compte d'un profil de hauteur d'une surface de chaussée dans la zone du carrefour routier (SK), et
- pour sélectionner comme position d'arrêt (POS) du véhicule (1) le point d'arrêt candidat au niveau duquel le système de capteurs de détection d'environnement (4) présente le plus grand champ de vision (S).

10. Dispositif (5) selon la revendication 9,
**caractérisé par** un châssis actif (9) qui est conçu pour modifier une orientation du véhicule (1) au niveau de la position d'arrêt (POS) de telle sorte que le champ de vision (S) du système de capteurs de détection d'environnement (4) est maximisé.
